# EUROPÄISCHE PATENTSCHRIFT

(11) **EP 0 893 324 B1**
(45) Veröffentlichungstag und Bekanntmachung des Hinweises auf die Patenterteilung: **06.10.2004**
(21) Anmeldenummer: 98113721.9
(22) Anmeldetag: 22.07.1998
(51) Int. Cl.: B62B 1/00, B62B 1/06

(54) **Arbeits- und Transportwagen**
Utility and transport trolley
Chariot de travail et de transport

(30) Priorität: 22.07.1997 DE 19731441
(43) Veröffentlichungstag der Anmeldung: 27.01.1999
(73) Patentinhaber: Fraunhofer-Gesellschaft zur Förderung der angewandten Forschung e.V., 80686 München (DE)
(72) Erfinder: Bauer, Wilhelm, Dipl.-Ing, 70469 Stuttgart (DE); Schmidt, Michael, Dipl.-Ing., 70180 Stuttgart (DE); Kern, Peter, Prof.Dr.-Ing, 70193 Stuttgart (DE)
(74) Vertreter: Pfenning, Meinig & Partner

(56) Entgegenhaltungen:
- US-A- 1 994 225
- US-A- 3 937 464
- US-A- 4 348 034
- US-A- 4 925 147

## Beschreibung

Die Erfindung betrifft einen Arbeits- und Transportwagen, der umgangssprachlich auch Caddy genannt wird und der Möglichkeiten eröffnet, verschiedene Aufgaben zu erfüllen und in seinem konstruktiven Aufbau einfach von Ort zu Ort bewegt werden kann, so dass ein hohes Maß an Mobilität erreicht werden kann.

Bisher bekannte mobile Einheiten sind in der Regel so ausgebildet, dass sie für ganz bestimmte Aufgaben ausgebildet sind, wobei das Hauptaugenmerk normalerweise auf den Transport von bestimmten Gegenständen gerichtet ist, so dass andere Anwendungen, wenn überhaupt, nur bedingt möglich werden.

So ist in US 3,937,464 eine Vorrichtung beschrieben, die ein Fußteil mit Stützelementen und Rollen aufweist, so dass sie verfahrbar ist. An einer Säule kann ein Träger in verschiedenen Höhen fixiert werden, auf dem ein Ball zu Übungszwecken aufgelegt werden kann.

Aus US 4,925,147 ist eine fahrbare Staffelei bekannt, die ebenfalls ein Fußteil mit Rädern und Stützelementen aufweist. An diesem Fußteil ist eine teleskopförmige Säule, bestehend aus zwei Elementen vorhanden. Dabei sind an beiden Teleskopteilen Befestigungselemente vorhanden, so dass durch entsprechende Einstellung eines Teleskopes Bilder oder eingrahmte Leinwände halten oder freigeben können.

Es ist daher Aufgabe der Erfindung, einen Arbeitsund Transportwagen vorzuschlagen, der einmal mobil ist und flexibel für verschiedene Aufgaben ausgestattet werden kann.

Erfindungsgemäß wird diese Aufgabe durch die Merkmale des Patentanspruchs 1 gelöst. Vorteilhafte Ausgestaltungsformen und Weiterbildungen der Erfindung ergeben sich bei Nutzung der in den untergeordneten Ansprüchen genannten Merkmale.

Der erfindungsgemäße Arbeits- und Transportwagen verfügt über eine Standsäule, die bodenseitig in einem dreibeinigen Fuß ausläuft, wobei an einem der Beine zwei Rollen drehbar befestigt sind. Dabei sind die drei Beine des Fußes sternförmig ausgerichtet und vorteilhaft die beiden Füße, an denen sich keine drehbaren Rollen bzw. Räder befinden, haben vorteilhaft eine größere Länge als dieses Bein, so daß in abgestellter Stellung ein höheres Maß an Stabilität erreicht werden kann. Die Standsäule kann hierbei vom Fuß ein getrenntes Bauteil sein, das dauerhaft mit dem Fuß verbunden sein kann. An der Standsäule ist erfindungsgemäß mindestens ein Sonderbeschlag vorhanden, an dem verschiedene Komponenten lösbar befestigt werden können. Die Anordnung von mindestens eines solchen Sonderbeschlages erfolgt vorteilhafterweise im oberen Bereich der Standsäule und auf der Seite, die entgegengesetzt zu dem Bein mit den Rollen liegt.

Es kann jedoch auch mindestens ein weiterer solcher Sonderbeschlag an der Standsäule vorhanden sein, der dem ersten Sonderbeschlag gegenüberliegt, wobei jedoch eine Höhendifferenz vorhanden sein kann.

Ein solcher Sonderbeschlag besteht aus zwei Teilen, wobei eines der beiden Teile starr an der Standsäule befestigt ist und der andere Teil mit einem Betätigungselement entriegelt und im Anschluß an die Entriegelung gekippt werden kann, so daß eine entsprechende Halterung an einer Komponente, die an einem erfindungsgemäßen Arbeits- und Transportwagen befestigt werden kann, in der Freigabestellung des Sonderbeschlages abgenommen bzw. abgekippt werden kann.

Als Betätigungselement wird vorteilhaft ein Griff eingesetzt, der neben dieser Aufgabe zusätzlich auch beim Transport des Arbeits- und Transportwagens nützlich ist. Für die Bewegung eines solchen Wagens kann der entsprechende Benutzer den Griff erfassen, den Arbeits- und Transportwagen leicht ankippen und je nachdem diesen ziehen oder schieben.

Die Betätigung des Sonderbeschlages für die Entnahme einer Komponente, die am erfindungsgemäßen Arbeitsund Transportwagen befestigt worden ist, kann in der Form erfolgen, daß der Griff in Richtung auf den Fuß gedrückt wird, ein Teil des Griffes dabei in das innere der Standsäule bewegt und eine Entriegelung frei gegeben wird. Nach Freigabe der Entriegelung kann der Griff um eine Achse gekippt werden und der kippbare Teil des Sonderbeschlages kann die Bewegung des Halteelementes an der Komponente, die am erfindungsgemä-Ben Arbeits- und Transportwagen gehalten wird, freigeben. Die Halterung der Komponente ist dabei so ausgebildet, daß Sie auch in dieser Freigabestellung vom starren Teil des Sonderbeschlages weiter gehalten wird, so daß bestimmte Komponenten, wobei auf ein Beispiel hierfür noch zurückzukommen sein wird, um diese Achse gekippt werden können oder die entsprechende Komponente von diesem Teil des Sonderbeschlages abgenommen werden kann.

Wie bereits erwähnt, ist der Griff in der Standsäule aufgenommen und dort günstigerweise mit einem Federelement vorgespannt, so daß ohne äußere Krafteinwirkung die Verriegelung des Sonderbeschlages gesperrt ist.

Eine mögliche Komponente, mit der der erfindungsgemäße Arbeits- und Transportwagen ausgestattet werden kann, ist beispielsweise eine Arbeitsplatte, die in der bereits beschriebenen Form fixiert gehalten, abgekippt oder abgenommen werden kann. Die Arbeitsplatte kann für die verschiedenen Funktionen, z.B. als Unterlage zu Schreibzwecken eingesetzt werden.

Eine andere Komponenten, die an dem erfindungsgemäßen Arbeits- und Transportwagen befestigt werden kann, ist beispielsweise ein Behälter zur Aufnahme verschiedenster Gegenstände, die mit dem Arbeits- und Transportwagen von einem zum anderen Ort transportiert werden müssen. Ein solcher Behälter kann mit einem Deckel verschlossen werden, wobei dieser Deckel günstigerweise als Klappe, die um eine Drehachse kippbar ist, ausgebildet ist. Diese Klappe kann einmal im oberen Teil des Behälters und zum anderen an der entgegengesetzten Seite, an der sich die Halterung zur Fixierung des Behälters an der Standsäule mit dem Sonderbeschlag befindet, angeordnet sein. Die letztgenannte Möglichkeit hat den Vorteil, daß ein solcher Behälter auch an anderen Gegenständen, wie z.B. einem Stuhlfuß befestigt werden kann. Im einfachsten Fall kann die Halterung des Behälters als zwei einfache Öffnungen in der Rückwand ausgebildet sein, in die die beiden Teile des bereits beschriebenen Sonderbeschlages eingreifen können.

Günstigerweise hat die Standsäule einen elliptischen Querschnitt, wobei der bzw. die Sonderbeschläge an den jeweils breiteren Seiten der Standsäule angeordnet sind.

In einer vorteilhaften Weiterbildung ist die Standsäule höhenverstellbar ausgebildet. Hierfür kann die Standsäule aus zwei ineinandergeführten Teilen bestehen, die teleskopförmig ineinander greifen und zumindest eines der Teile von dem anderen Teil geführt und gehalten ist und zusätzlich eine Arretierung vorhanden ist, mit der die eingestellte Höhe der Standsäule fixierbar ist. Nach lösen der Arretierung kann dann die Höhe variiert und die Arretierung in der gewünschten Stellung der beiden Teile der Standsäule erneut fixiert werden.

Nachfolgend soll die Erfindung an einem Ausführungsbeispiel näher beschrieben werden.

Dabei zeigen:
- Figur 1: ein Beispiel eines Arbeits- und Transportwagens mit Arbeitsplatte und Behälter;
- Figur 2: die Anordnung zweier sich gegenüberliegender Sonderbeschläge;
- Figur 3: ein Beispiel für einen Sonderbeschlag;
- Figur 4: ein zweites Beispiel für einen Sonderbeschlag;
- Figur 5: einen an einem erfindungsgemäßen Arbeitsund Transportwagen befestigbaren Behälter und
- Figur 6: eine weitere Nutzungsmöglichkeit für einen solchen Behälter.

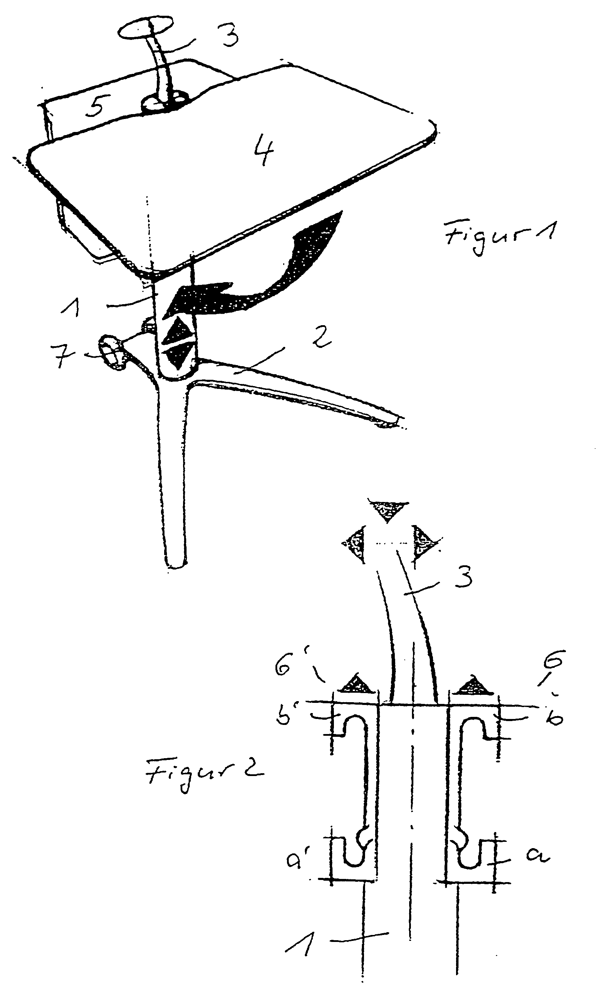

Bei dem in der Figur 1 gezeigten erfindungsgemäßen Arbeits- und Transportwagen ist dieser mit zwei verschiedenen Komponenten, nämlich einer Arbeitsplatte 4 und einem Behälter 5 ergänzt worden. Am Boden der Standsäule 1 befindet sich ein dreibeiniger Fuß 2, dessen drei Beine sternförmig ausgebildet sind. An einem der Beine des Fußes 2 sind Rollen bzw. kleine Räder 7 angeordnet, mit denen der erfindungsgemäße Arbeits- und Transportwagen in leicht angekippter Stellung mit Hilfe des Griffes 3 gezogen oder geschoben werden kann. Mit den beiden Pfeilen an der Standsäule 1 soll ausgedrückt sein, daß diese höhenverstellbar ist, so daß beispielsweise die Höhe der Arbeitsplatte 4 variiert und den entsprechenden Bedürfnissen angepaßt werden kann. Wird die Arbeitsplatte 4 nicht benötigt, kann der in dieser Darstellung nicht erkennbare Sonderbeschlag gelöst und wie dies mit dem längeren Pfeil in der Figur 1 angedeutet ist, geklappt werden, so daß der erforderliche Raumbedarf verringert werden kann, wenn die Arbeitsplatte nicht benötigt wird.

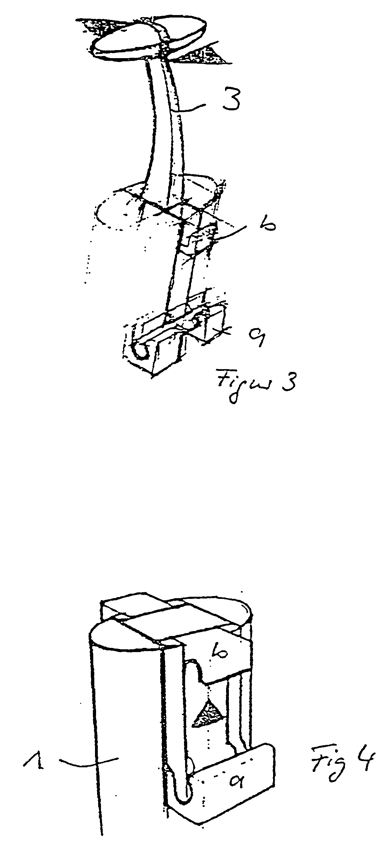

Die Figur 2 zeigt zwei sich gegenüberliegend angeordnete Sonderbeschläge 6 und 6', an denen beispielsweise die in Figur 1 gezeigten Komponenten befestigt und gehalten werden können. Die Sonderbeschläge 6 und 6' haben dabei zwei wesentliche Elemente a und b, wobei die Elemente a starr an der Standsäule 1 befestigt sind. Der Griff 3, der hier nur teilweise dargestellt ist, wird in einer Führung in der Standsäule 1 gehalten und kann je nach Bedarf in die Richtungen, die mit den fünf dargestellten Pfeilen angedeutet sind, bewegt werden. Dabei werden die Sonderbeschläge 6 und 6' durch hineindrücken des Griffes in Richtung des Bodens in die Standsäule 1 entriegelt und im Anschluß daran kann der Griff 3 in Richtung von einem der beiden Sonderbeschläge 6 oder 6' gekippt werden, wobei Teil b des jeweilig anderen Sonderbeschlages 6 oder 6' die Fixierung der von ihr gehaltenen Komponente 4 oder 5 freigibt, die auch in dieser Stellung noch von dem Teil a, a' gehalten wird. In der Freigabestellung kann dann die jeweilige Komponente aus dem Teil a oder a' entnommen oder, wie dies bereits bei der Beschreibung der Figur 1 erwähnt worden ist, abgekippt werden.

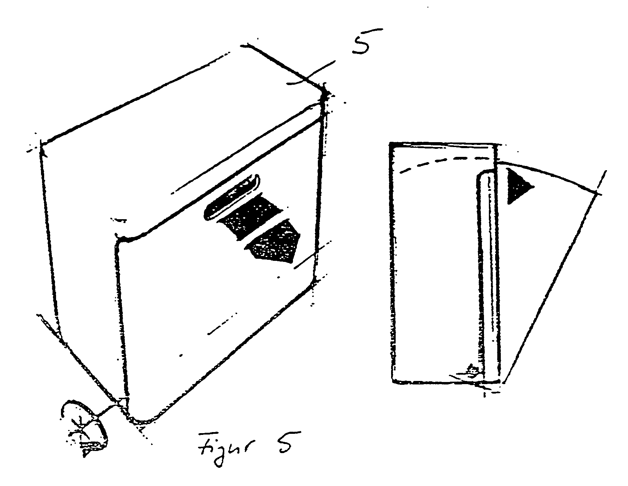

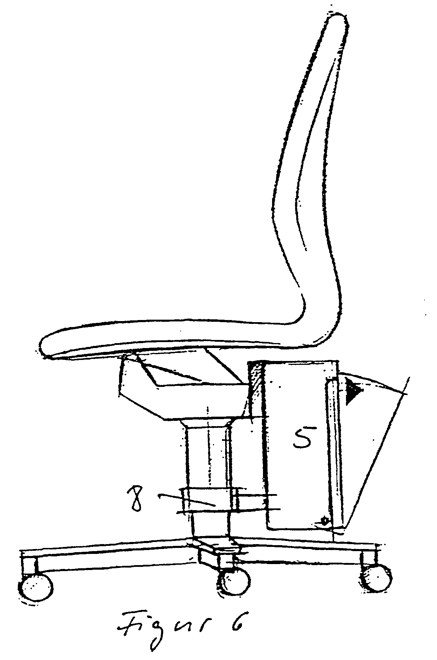

Die Figuren 3 und 4 geben zwei Möglichkeiten für die Ausbildung der Sonderbeschläge 6 oder 6' wieder. Der wesentliche Unterschied, der bei diesen Sonderbeschlägen erkennbar ist, ist die Ausbildung des jeweiligen Teiles b, deren Haltenasen in entgegengesetzte Richtungen weisen.

In der Figur 5 ist ein Beispiel eines Behälters 5, der am erfindungsgemäßen Arbeits- und Transtportwagen befestigt werden kann, dargestellt. Dieser verfügt an einer Seite über eine Klappe, die über eine Drehachse aufgeklappt werden kann und so das innere des Behälters zugänglich wird. Mit einer nicht dargestellten Feder oder einem Verschluß kann in normaler Stellung die Klappe in geschlossenem Zustand gehalten werden. An der der Klappe gegenüberliegenden Seite ist dann die Halterung, in die der Sonderbeschlag eingreifen kann, vorhanden.

Die in der Figur 5 gezeigte Variante eines solchen Behälters 5 kann vorteilhafterweise, wie dies in der Figur 6 dargestellt ist, auch an einem Stuhl befestigt werden, wobei dieser, wie dargestellt, in seinem Fuß, also unterhalb der eigentlichen Sitzfläche, einen Sonderbeschlag aufweist, der zumindest ähnlich, wie der Sonderbeschlag des erfindungsgemäßen Arbeits- und Transportwagens ausgebildet ist. Am Fuß des Stuhles kann dann ein zusätzliches Stützelement 8 vorhanden sein, um den Behälter 5 in diesem Bereich abzustützen und ein abkippen zu verhindern.

## Patentansprüche

1. Arbeits- und Transportwagen mit einer bodenseitig in einem dreibeinigen Fuß auslaufenden Standsäule, wobei an einem der Beine zwei Rollen drehbar befestigt sind und an der Standsäule (1) mindestens ein Sonderbeschlag (6, 6') zur lösbaren Befestigung von Komponenten vorhanden ist, **dadurch gekennzeichnet , dass** der Sonderbeschlag (6, 6') aus einem Teil (a), das an der Standsäule (1) starr befestigt ist und einem weiteren Teil (b) besteht und dass bei Bewegung eines mit einem Federelement vorgespannten und in der Standsäule geführten Betätigungselementes (3) in Richtung auf den Fuß (2) eine Verriegelung lösbar und das Teil (b) des Sonderbeschlages (6, 6') kippbar ist.

2. Arbeits- und Transportwagen nach Anspruch,
**dadurch gekennzeichnet, dass** das Betätigungselement ein Griff (3) ist.

3. Arbeits- und Transportwagen nach Anspruch 1 oder 2, **dadurch gekennzeichnet, dass** an der Standsäule (1) an der dem ersten Sonderbeschlag (6) gegenüberliegenden Seite ein zweiter Sonderbeschlag (6') vorhanden ist.

4. Arbeits- und Transportwagen nach einem der Ansprüche 1 bis 3,
**dadurch gekennzeichnet, dass** an dem ersten Sonderbeschlag (6) eine Arbeitsplatte (4) als Komponente befestigbar ist.

5. Arbeits- und Transportwagen nach einem der Ansprüche 1 bis 4,
**dadurch gekennzeichnet, dass** am zweiten Sonderbeschlag (6') ein Behälter (5) als Komponente befestigbar ist.

6. Arbeits- und Transportwagen nach einem der Ansprüche 1 bis 5,
**dadurch gekennzeichnet, dass** der Behälter (5) mit einem Deckel verschließbar ist.

7. Arbeits- und Transportwagen nach Anspruch 6,
**dadurch gekennzeichnet, dass** der Deckel um eine Achse aufklappbar ist.

8. Arbeits- und Transportwagen nach einem der Ansprüche 1 bis 7,
**dadurch gekennzeichnet, dass** die Standsäule (1) einen elliptischen Querschnitt hat.

9. Arbeits- und Transportwagen nach einem der Ansprüche 1 bis 8,
**dadurch gekennzeichnet, dass** die Standsäule (1) höhenverstellbar ist.

10. Arbeits- und Transportwagen nach Anspruch 9,
**dadurch gekennzeichnet, dass** die Standsäule (1) aus zwei ineinander geführten Teilen besteht, die gegeneinander mit einer lösbaren Arretierung fixiert gehalten sind.

## Claims

1. Utility and transport trolley with an upright support column ending in a three-legged foot in the direction of the floor, whereby two rollers are rotatably affixed to one of the said legs, and whereby the upright support column (1) incorporates at least one special fitment (6, 6') for the disconnectable affixing of components, **characterised in that** the special fitment (6, 6') consists of a part (a) being fixedly attached to the upright support column (1) and a further part (b), and **in that** a locking mechanism can be disconnected and the part (b) of the special fitment (6, 6') tilted during the movement of an activating element (3) biased with the aid of a spring element and guided within the upright support column in the direction of the foot (2).

2. Utility and transport trolley according to the preceding Claim, **characterised in that** the activating element consists of a handle (3).

3. Utility and transport trolley according to Claim 1 or 2, **characterised in that** the upright support column (1) is equipped with a second special fitment (6') on the side opposite the first special fitment (6).

4. Utility and transport trolley according to one of the preceding Claims 1 to 3, **characterised in that** the first special fitment (6) is equipped with a utility plate (4), whereby the same can be affixed as a component.

5. Utility and transport trolley according to one of the preceding Claims 1 to 4, **characterised in that** the second special fitment (6') is equipped with a container (5), whereby the same can be affixed as a component.

6. Utility and transport trolley according to one of the preceding Claims 1 to 5, **characterised in that** the container (5) can be closed with a lid.

7. Utility and transport trolley according to Claim 6, **characterised in that** the lid can be tilted open around an axis of the same.

8. Utility and transport trolley according to one of the preceding Claims 1 to 7, **characterised in that** the upright support column (1) incorporates an elliptic cross section.

9. Utility and transport trolley according to one of the preceding Claims 1 to 8, **characterised in that** the upright support column (1) is height adjustable.

10. Utility and transport trolley according to Claim 9, **characterised in that** the upright support column (1) consists of two engaging parts, whereby the same are held in a fixed position against one another with the aid of a disconnectable arresting mechanism.

## Revendications

1. Chariot de travail et de transport, comportant une colonne fixe se terminant, côté sol, en un pied tripartite, deux roulettes étant fixées de façon rotative sur un des pieds et au moins une ferrure spéciale (6, 6') pour la fixation amovible de composant étant prévue sur la colonne fixe (1)
**caractérisé en ce que**,
la ferrure spéciale (6, 6') est composée d'une partie (a) qui est solidement fixée à la colonne fixe (1) et d'une autre partie (b), et **en ce que**, lors du mouvement, dans la direction du pied (2), d'un élément de commande (3) guidé dans la colonne fixe et précontraint par un élément à ressort, un verrouillage peut être débrayé et la partie (b) de la ferrure spéciale (6, 6') peut être basculée.

2. Chariot de travail et de transport selon la revendication 1, **caractérisé en ce que** l'élément de commande est une poignée (3).

3. Chariot de travail et de transport selon la revendication 1 ou 2,
**caractérisé en ce qu'**une seconde ferrure spéciale (6') est prévue sur la colonne fixe (1) sur la face opposée à la première ferrure spéciale (6).

4. Chariot de travail et de transport selon une des revendications 1 à 3,
**caractérisé en ce qu'**un plateau de travail (4) peut être fixé comme composant au niveau de la première ferrure spéciale (6).

5. Chariot de travail et de transport selon une des revendications 1 à 4,
**caractérisé en ce qu'**un récipient (5) peut être fixé comme composant au niveau de la seconde ferrure spéciale (6').

6. Chariot de travail et de transport selon une des revendications 1 à 5,
**caractérisé en ce que** le récipient (5) peut être verrouillé avec un couvercle.

7. Chariot de travail et de transport selon la revendication 6,
**caractérisé en ce que** le couvercle peut être relevé autour d'un axe.

8. Chariot de travail et de transport selon une des revendications 1 à 7,
**caractérisé en ce que** la colonne fixe (1) présente une section transversale elliptique.

9. Chariot, de travail et de transport selon une des revendications 1 à 8,
**caractérisé en ce que** la colonne fixe (1) est réglable en hauteur.

10. Chariot de travail et de transport selon la revendication 9,
**caractérisé en ce que** la colonne fixe (1) est composée de deux parties guidées l'une dans l'autre, maintenues fixes l'une contre l'autre à l'aide d'un dispositif d'arrêt amovible.
